# EUROPEAN PATENT APPLICATION

(11) **EP 4 389 509 A2**
(43) Date of publication of application: **26.06.2024**
(21) Application number: 23216474.9
(22) Date of filing: 13.12.2023
(51) Int. Cl.: B60L 53/66, B60L 53/65

(54) **MANAGEMENT SERVER AND MANAGEMENT METHOD**

(30) Priority: 19.12.2022 JP 2022202028
(71) Applicant: TOYOTA JIDOSHA KABUSHIKI KAISHA, Toyota-shi, Aichi-ken 471-8571 (JP)
(72) Inventor: MATSUMOTO, Takashi, Toyota-shi, Aichi-ken 471-8571 (JP); HASEGAWA, Keiko, Toyota-shi, Aichi-ken 471-8571 (JP); TAKAHASHI, Masashi, Toyota-shi, Aichi-ken 471-8571 (JP); NAKAMURA, Toru, Toyota-shi, Aichi-ken 471-8571 (JP); MIYATA, Ai, Toyota-shi, Aichi-ken 471-8571 (JP)
(74) Representative: Cabinet Beau de Loménie

(57) **Abstract**

A micro grid (MG) includes an EMS server (100), an airport management server (300), a distributed power source group (400), and a power line (410). The distributed power source group (400) includes an airport facility (10) and a vehicle group (40) parked in a parking lot attached to the airport facility (10). Vehicles (50, 60, 70) included in the vehicle group (40) control charging/discharging of batteries in response to a demand response from the EMS server (100) while they are parked in the parking lot.

## Description

### BACKGROUND OF THE INVENTION

### 1. Field of the Invention

The present disclosure relates to a management server and a management method.

### 2. Description of Related Art

A virtual power plant (VPP) in which a microgrid constructed in a predetermined area or the like functions as if it were a single power plant is well-known. Power within the microgrid is regulated using a distributed power source, such as a power generating unit for a renewable energy. In recent years, as disclosed in Japanese Unexamined Patent Application Publication No. 2020-102025, the use of an electrified vehicle with a charging function, an electrified vehicle with a discharging function, and the like as distributed power sources has also been considered.

### SUMMARY OF THE INVENTION

In order to promote the utilization of the VPP, it is desirable to actively utilize a vehicle with a charging/discharging function. Here, for example, there is a case where a vehicle having a charging/discharging function is parked in a parking lot or the like and a user of the vehicle moves by another moving body. The parked vehicle is assumed to be unused until the user of the vehicle returns with another moving body. From the viewpoint of promoting the utilization of the VPP, it is desirable to effectively utilize such a vehicle as a distributed power source.

The present disclosure provides a management server, a management method, a vehicle, a program, and a moving body management server that can appropriately utilize a vehicle that is not in use as a distributed power source.

A first aspect of the invention relates to a management server including a communication device and a control device. The communication device is configured to be communicable with charging/discharging equipment that transfers power to and from a vehicle on which a battery is mounted. The control device is configured to transmit a command regarding transfer of power to and from the vehicle used by a user to the charging/discharging equipment via the communication device. The control device is configured to acquire information on a moving body that the user boards and acquire an arrival time at which the moving body arrives at a destination based on the information on the moving body. The destination is a place where the user alights from the moving body. The control device is configured to transmit the command by the arrival time.

In the configuration, the command regarding the transfer of power of the vehicle is transmitted to the charging/discharging device by the time the moving body arrives at the destination. As a result, the vehicle can be used as the distributed power source until the moving body reaches its destination.

In the management server according to the first aspect, the control device may be configured to transmit the command by an updated arrival time when the arrival time is updated.

A delay may occur in the arrival time of the moving body. According to the above-described configuration, when there is a delay in the arrival time of the moving body, the arrival time is updated, so the period during which the vehicle is utilized can be appropriately corrected. Therefore, it is possible to increase the utilization efficiency of the vehicle.

In the first aspect, the control device may be configured to update the arrival time when the moving body is delayed.

With the above-described configuration, it is possible to appropriately update the arrival time. Therefore, it is possible to appropriately correct the period during which the vehicle is utilized.

In the first aspect, the information on the moving body may include identification information for identifying the moving body.

In the first aspect, the information on the moving body may further include information on a place where the user alights from the moving body.

With the above-described configuration, it is possible to appropriately specify the moving body.

In the first aspect, the information on the moving body may include available section information of a boarding pass of the moving body and information on a departure time of the moving body. The control device is configured to acquire information on an entry time of the user to a departure/arrival point of the moving body and acquire the arrival time based on the available section information, the information on the departure time, and the information on the entry time.

With the above-described configuration, it is possible to appropriately acquire the arrival time of the moving body.

In the first aspect, the control device may be configured to accept a condition set by the user regarding an amount of charge of the battery at the arrival time and create the command such that the amount of charge of the battery at the arrival time satisfies the condition.

For example, in order to move a predetermined distance after using the vehicle as the distributed power source, it may be desirable to keep the amount of charge of the battery above a certain level. With the above-described configuration, the user can set conditions regarding the amount of charge of the battery at the arrival time. By making it possible to set such conditions, it is possible to promote the use of vehicles as distributed power sources by improving user convenience.

In the first aspect, the control device may be configured to accept a condition set by the user regarding at least one of an upper limit amount of charge and a lower limit amount of charge of the battery at a time of response to the command, and create the command such that the amount of charge of the battery satisfies the condition.

For example, in some cases, the user desires to use the battery within a predetermined range of the amount of charge in order to suppress deterioration of the battery. According to the above-described configuration, the user can set at least one condition of the upper limit amount of charge and the lower limit amount of charge of the battery when responding to the command. By making it possible to set such conditions, it is possible to promote the use of vehicles as distributed power sources by improving user convenience.

In the first aspect, the control device may be configured to accept a condition set by the user regarding a charging/discharging limit that is a limit of a charging/discharging amount of the battery during a period for responding to the command, and create the command such that the charging/discharging amount of the battery satisfies the condition.

For example, the user may desire to set the limit amount of charging/discharging of the battery. With the above-described configuration, the user can set the condition regarding the charging/discharging limit when responding to the command. By making it possible to set such conditions, it is possible to promote the use of vehicles as distributed power sources by improving user convenience.

In the first aspect, the control device may be configured to accept setting of a response period for responding to the command set by the user, and transmit the command to the vehicle during the response period.

For example, the user may desire to set a response period, that is, a period during which the vehicle is permitted to be used as a distributed power source. With the above-described configuration, the user can set the response period. By making such settings possible, it is possible to promote the use of vehicles as distributed power sources by improving user convenience.

In the first aspect, the communication device may be further configured to acquire a supply and demand request from an electrical grid. The control device may be configured to create the command based on the supply and demand request acquired via the communication device.

With the above-described configuration, it is possible to create the command according to the supply and demand request.

A second aspect of the invention relates to a management method including a step of communicating with charging/discharging equipment that transfers power to and from a vehicle on which a battery is mounted and transmitting a command regarding transfer of power to and from the vehicle used by a user to the charging/discharging equipment, a step of acquiring information on a moving body that the user boards, and a step of acquiring an arrival time at which the moving body arrives at a destination that is a place where the user alights from the moving body based on the information on the moving body. The step of communicating includes a step of transmitting the command by the arrival time.

In the second aspect may further include a step of transmitting the command to the charging/discharging equipment by an updated arrival time when the arrival time is updated.

In the second aspect may further include a step of updating the arrival time when the moving body is delayed.

In the second aspect, the information on the moving body may include identification information for identifying the moving body.

In the second aspect, the information on the moving body may further include information on a place where the user alights from the moving body.

In the second aspect, the information on the moving body may include available section information of a boarding pass of the moving body and information on a departure time of the moving body. The management method may further include a step of acquiring information on an entry time of the user to a departure/arrival point of the moving body, and a step of acquiring the arrival time based on the available section information, the information on the departure time, and the information on the entry time.

In the second aspect, the management method may further include a step of accepting a condition set by the user regarding an amount of charge of the battery at the arrival time, and a step of creating the command such that the amount of charge of the battery at the arrival time satisfies the condition.

In the second aspect, the management method may further include a step of accepting a condition set by the user regarding at least one of an upper limit amount of charge and a lower limit amount of charge of the battery at a time of response to the command, and a step of creating the command such that the amount of charge of the battery satisfies the condition.

In the second aspect, the management method may further include a step of accepting a condition set by the user regarding a charging/discharging limit that is a limit of a charging/discharging amount of the battery during a period for responding to the command, and a step of creating the command such that the charging/discharging amount of the battery satisfies the condition.

In the second aspect, the management method may further include a step of accepting setting of a response period for responding to the command set by the user, and a step of transmitting the command to the vehicle during the response period.

In the second aspect, the management method may further include a step of acquiring a supply and demand request from an electrical grid, and a step of creating the command based on the supply and demand request.

A third aspect of the invention relates to a vehicle on which a battery is mounted including a communication device and a control device. The communication device is configured to be communicable with a server that performs power management in a predetermined area. The control device controls transfer of power to and from charging/discharging equipment. The control device is configured to control the transfer of power to and from the charging/discharging equipment according to a command regarding a charging/discharging instruction from the server by an arrival time at which a moving body that a user of the vehicle boards arrives at a destination. The destination is a place where the user alights from the moving body.

A fourth aspect of the invention relates to a program that causes a computer to execute a step of acquiring first information on a user of a vehicle that performs transfer of power to and from charging/discharging equipment, a step of acquiring second information on a moving body that a user of the vehicle boards, and a step of transmitting the first information and the second information to a server.

In the fourth aspect, the program may further cause the computer to execute a step of acquiring third information indicating whether the vehicle can be used as a distributed power source in response to a supply and demand request received from outside, and a step of transmitting the first information, the second information, and the third information to the server.

A fifth aspect of the invention relates to a moving body management server including a communication device and a control device. The communication device is configured to be communicable with a management server that manages charging/discharging of a vehicle on which a battery is mounted. The control device is configured to transmit an arrival time of a moving body to the management server. The control device is configured to acquire identification information for identifying the moving body, acquire information on a user who uses the vehicle that performs charging/discharging, and transmit to the management server an arrival time at which the moving body arrives at a destination when a user who boards the moving body and the user who uses the vehicle match based on the identification information. The destination is a place where the user who boards the moving body alights from the moving body.

A sixth aspect of the invention relates to a moving body management server including a communication device and a control device. The communication device is configured to be communicable with a management server that manages charging/discharging of a vehicle on which a battery is mounted. The control device is configured to transmit an arrival time of a moving body to the management server. The control device is configured to acquire information on an entry time of the user to a departure/arrival point of the moving body and section information on which the user uses the moving body, acquire information on a user who uses the vehicle that performs charging/discharging, and transmit to the management server an arrival time at which the moving body that the user boards arrives at a destination when a user who enters the departure/arrival point and the user who uses the vehicle match. The destination is a place where the user who boards the moving body alights from the moving body.

In the fifth aspect or the sixth aspect, the control device may be configured to acquire response information as to whether the user responds to a command regarding transfer of power to and from the vehicle, and transmit the arrival time when responding to the command.

With each aspect of the present disclosure, a vehicle that is not in use can be appropriately utilized as a distributed power source.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of a power system according to an embodiment;
FIG. 2A is a diagram illustrating a configuration example of a vehicle compatible with a contact charging/discharging method and a non-contact charging/discharging method;
FIG. 2B is a diagram illustrating a configuration example of a vehicle compatible only with the contact charging/discharging method;
FIG. 2C is a diagram illustrating a configuration example of a vehicle compatible only with a non-contact charging/discharging method;
FIG. 3 is a diagram illustrating an example of a VPP participation application form displayed on a display screen of a smartphone;
FIG. 4 is a sequence diagram outlining exchange of information between a smartphone, an EMS server, and an airport management server.
FIG. 5 is a functional block diagram of a control device of the EMS server;
FIG. 6 is a flowchart illustrating a procedure of VPP participation condition setting processing;
FIG. 7 is a flowchart illustrating a procedure of processing for creating a demand response based on a set VPP participation condition;
FIG. 8 is a flowchart illustrating detailed processing of selection processing;
FIG. 9 is a diagram illustrating a procedure of processing for monitoring an arrival/departure delay of a flight, which is executed by a control device of an EMS server according to a first modification example;
FIG. 10 is a diagram illustrating a schematic configuration of a power system according to a third modification example;
FIG. 11 is a diagram illustrating an example of a VPP participation application form displayed on a display screen of a smart phone in a fourth modification example; and
Fig. 12 is a sequence diagram outlining exchange of information between the smartphone, an EMS server, and a Japanese bullet train (Shinkansen) management server in the fourth modification example.

### DETAILED DESCRIPTION OF EMBODIMENTS

Hereinafter, embodiments of the present disclosure will be described in detail with reference to the drawings. Similar or corresponding parts in the drawings are denoted by the same reference numerals, and the description thereof will not be repeated.

### Overall Configuration of Power System

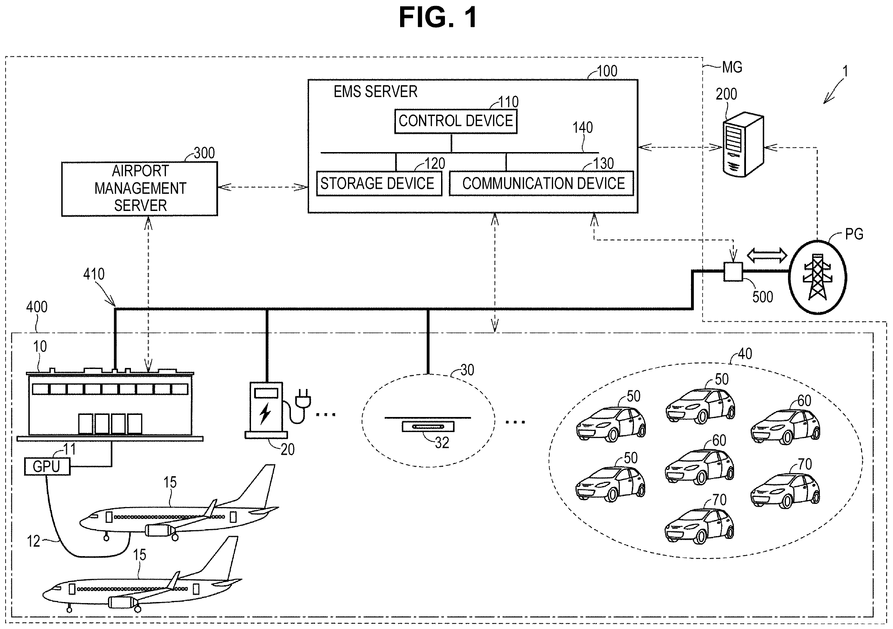

FIG. 1 is a diagram illustrating a schematic configuration of a power system 1 according to the present embodiment. The power system 1 includes an electrical grid PG, a power transmission and distribution operator server 200, a substation facility 500, and a microgrid MG.

The microgrid MG according to the present embodiment is a small-scale electrical grid constructed at an airport. The microgrid MG includes an energy management system (EMS) server 100, an airport management server 300, a distributed power source group 400, and a power line 410.

The supply and demand of power within the microgrid MG is managed by the EMS server 100. The power line 410 for networking the distributed power source group 400 in the microgrid MG may be a private power line. The microgrid MG is configured such that it can be paralleled and disconnected to and from the electrical grid PG.

The power transmission and distribution operator server 200 is a computer that manages supply and demand of the electrical grid PG. The electrical grid PG is a power network constructed by a power plant and transmission/distribution equipment (not illustrated). In the present embodiment, the power company serves as both a power generation company and a power transmission/distribution company. The power company maintains and manages the electrical grid PG (commercial power system). The power company corresponds to an administrator of the electrical grid PG. The power transmission and distribution operator server 200 belongs to the power company.

The substation facility 500 is provided at an interconnection point (power receiving point) of the microgrid MG, and is configured to be capable of switching between parallel (connection) and disconnection between the electrical grid PG and the microgrid MG. The substation facility 500 is located at a connection point between the microgrid MG and the electrical grid PG.

When the microgrid MG is in interconnected operation mode while being connected to the electrical grid, the substation facility 500 receives alternating current power from the electrical grid PG, steps down the received power, and supplies it to the microgrid MG. When the microgrid MG is disconnected from the electrical grid PG and is operating in a self-sustained state, power is not supplied from the electrical grid PG to the microgrid MG. The substation facility 500 includes a switchgear (for example, a sectional switch, a disconnector, a circuit breaker, and a load switch) on a high voltage side (primary side), a transformer, a protection relay, measuring equipment, and a control device. The EMS server 100 is configured to receive information (for example, power waveform) on the microgrid MG from the substation facility 500 and instruct the substation facility 500 to parallel and disconnect.

The EMS server 100 is configured to communicate with each of the power transmission and distribution operator server 200, the airport management server 300, and the distributed power source group 400. The communication protocol may be OpenADR. The distributed power source group 400 includes a plurality of distributed power sources electrically connectable to the power line 410. Each of the distributed power sources functions as a power adjustment resource in the microgrid MG. The EMS server 100 is configured to manage the distributed power sources in the distributed power source group 400. The EMS server 100 may implement a demand response (DR) to the distributed power source group 400 when requested by the power transmission and distribution operator server 200 to adjust the supply and demand of the electrical grid PG. In addition, the EMS server 100 may implement a demand response to the distributed power source group 400 in response to a request from a supply and demand adjustment market. In addition, the EMS server 100 may implement a demand response to the distributed power source group 400 in order to adjust the supply and demand of the microgrid MG. The EMS server 100 corresponds to an example of a "management server", and the airport management server 300 corresponds to an example of a "moving body management server" according to the present disclosure.

The distributed power source group 400 includes an airport facility 10, a plurality of airplanes 15, a plurality of contact charging/discharging equipment 20, a plurality of non-contact charging/discharging equipment 30, and a vehicle group 40 parked in parking lots attached to the airport facility 10. Each of these may function as a distributed power source. The airport facility 10, each piece of contact charging/discharging equipment 20, and each piece of non-contact charging/discharging equipment 30 are electrically connected to each other via the power line 410.

The airport facility 10 includes service facilities including shops, restaurants, and the like, as well as terminals and the like. The airport facility 10 is provided with, for example, a naturally fluctuating power source such as a photovoltaic power generation system, a generator, and the like (none of which are illustrated). The airport facility 10 also includes a ground power unit (GPU) 11.

The GPU 11 is a device for supplying power from the airport facility 10 to the airplane 15 in a parked state. The GPU 11 supplies power to the airplane 15 via a power cable 12. The airplane 15 is provided with a connection port (not illustrated) to which a connector of the power cable 12 can be connected. The power cable 12 may, for example, be embedded in the ground. The GPU 11 can also supply heating and cooling (cold and warm air) from the airport facility 10 to the airplane 15 in a parked state via a ground-embedded duct (not illustrated). The airplane 15 in a parked state receives power and cooling/heating from the GPU 11, thereby suppressing driving of an auxiliary power unit (APU) to cover the needs of power and cooling/heating. Therefore, exhaust gas and noise can be reduced compared with when driving the APU.

Arrival and departure times of the airplane 15 are managed by the airport management server 300. The airport management server 300 stores flight schedules including arrival and departure times for all airplanes 15 to and from the airport facility 10. The airport management server 300 cooperates with airport management servers of other airports (not illustrated). The airport management server 300 amends the stored flight schedule of the airplane 15 each time there is a delay in the departure time of the airplane 15 and the arrival time of the airplane 15 at the airport facility 10.

The vehicle group 40 may include vehicles 50, 60, 70 corresponding to various charging/discharging methods. For example, the vehicle 50 is an electric vehicle (battery electric vehicle: BEV) compatible with both a contact charging/discharging method and a non-contact charging/discharging method. That is, the vehicle 50 can be charged and discharged using both the contact charging/discharging equipment 20 and the non-contact charging/discharging equipment 30. The vehicle 60 is an electric vehicle compatible with the contact charging/discharging method. The vehicle 60 does not support the non-contact charging/discharging method. The vehicle 60 can be charged and discharged using the contact charging/discharging equipment 20. The vehicle 70 is an electric vehicle compatible with a non-contact charging/discharging method. The vehicle 70 does not support the contact charging/discharging method. The vehicle 70 can be charged and discharged using the non-contact charging/discharging equipment 30. In the following description, the vehicles 50, 60, 70 are simply referred to as "vehicles" when they are not being distinguished from each other. The vehicle is not limited to an electric vehicle, and may be any vehicle compatible with at least one of a contact charging/discharging method and a non-contact charging/discharging method, for example. For example, the vehicle may be a plug-in hybrid electric vehicle (PHEV) or a fuel cell electric vehicle (FCEV).

The contact charging/discharging equipment 20 is charging/discharging equipment installed in a parking lot attached to the airport facility 10. The contact charging/discharging equipment 20 is equipped with a charging cable. When charging/discharging is performed by the contact charging/discharging method, the connector of the charging cable is connected to the connection port of the vehicle (vehicle 50, 60). In a state where the contact charging/discharging equipment 20 and the vehicle are electrically connected, power is transferred between the contact charging/discharging equipment 20 and the vehicle via the charging cable. The vehicle functions as a distributed power source by being electrically connected with the contact charging/discharging equipment 20.

The non-contact charging/discharging equipment 30 is charging/discharging equipment installed in a parking lot attached to the airport facility 10. The non-contact charging/discharging equipment 30 has a coil 32. When charging/discharging is performed by the non-contact charging/discharging method, the vehicle (vehicle 50, 70) is aligned such that the coil of the vehicle faces the coil 32 of the non-contact charging/discharging equipment 30. In a state where the aligning is performed, power is transferred between the coil of the vehicle and the coil 32 of the non-contact charging/discharging equipment 30 through a magnetic field. The vehicle functions as a distributed power source by being positioning with the coil 32 of the non-contact charging/discharging equipment 30.

Parking lots attached to the airport facility 10 can take a variety of forms. For example, a parking lot includes a first parking space equipped with the non-contact charging/discharging equipment 30 and a second parking space not equipped with any charging/discharging equipment. The contact charging/discharging equipment 20 is placed away from the parking space. For example, during a parking period, a user who wishes (for example, wishes to participate in the VPP) to have his or her vehicle respond to a demand response from the EMS server 100 parks his or her vehicle in the first parking space or the second parking space. However, the user of the vehicle 60 not compatible with the non-contact charging/discharging method parks the vehicle 60 in the second parking space. During the parking period, a user who does not wish to participate in the VPP parks his or her vehicle in the second parking space. For example, a charging/discharging robot (not illustrated) is used for contact charging/discharging. The charging/discharging robot automatically recognizes a lid that covers a connection port of a target vehicle, opens the lid, and connects a connector to the connection port. The charging/discharging robot pulls out the charging cable from the contact charging/discharging equipment 20 placed at a position away from the parking space, and connects the connector to the connection port of the target vehicle.

In addition, the parking lot may have a third parking space equipped with the contact charging/discharging equipment 20. For example, a user who parks the vehicle in the third parking space connects the connector of the charging cable provided in the contact charging/discharging equipment 20 to the connection port of the vehicle and then leaves the vehicle. When the charging/discharging robot is placed in the parking lot, the user may leave the vehicle without connecting the connector to the connection port. Further, the parking lot may include a fourth parking space equipped with both the contact charging/discharging equipment 20 and the non-contact charging/discharging equipment 30.

Vehicles parked in the parking lot attached to the airport facility 10 are expected to be parked continuously for relatively long periods of time, such as several hours to several days. It is desirable to effectively utilize such vehicles as distributed power sources. Therefore, by giving incentives to a user who has allowed the vehicle to be used as a distributed power source during the parking period, the user is encouraged to enable his or her vehicle in a parked state to participate in the VPP, and thus the vehicle in a parked state is effectively utilized. However, a user of the vehicle may desire to set a condition for permitting the use of the vehicle as a distributed power source. The condition used to permit the use of a vehicle as a distributed power source is a condition used to allow the user's vehicle to participate in the VPP, and is hereinafter also referred to as "VPP participation condition". The power system 1 according to the present embodiment allows the user to set the VPP participation condition. The configuration of the vehicle and the setting of the VPP participation condition will be described below.

### Vehicle Configuration

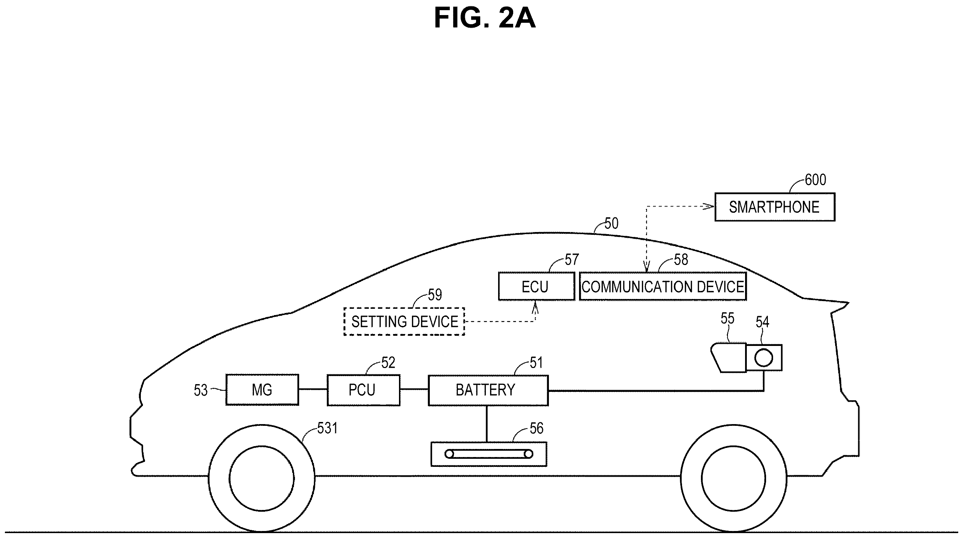

FIG. 2A is a diagram illustrating a configuration example of a vehicle 50 compatible with the contact charging/discharging method and the non-contact charging/discharging method. The vehicle 50 includes a battery 51, a power control unit (PCU) 52, a motor generator 53, a connection port 54, a lid 55, a coil 56, an electronic control unit (ECU) 57, and a communication device 58.

The battery 51 is mounted as a driving power source (that is, a power source) of the vehicle 50. The battery 51 includes a plurality of stacked batteries. The battery is, for example, a secondary battery such as a nickel hydrogen battery or a lithium-ion battery. Further, the battery may be a battery having a liquid electrolyte between the positive electrode and the negative electrode, or a battery (all-solid state battery) having a solid electrolyte.

The PCU 52 converts the direct current power stored in the battery 51 into alternating current power according to a control signal from the ECU 57 and supplies the alternating current power to the motor generator 53. The PCU 52 also converts the alternating current power generated by the motor generator 53 into direct current power and supplies the direct current power to the battery 51. The PCU 52 includes, for example, an inverter and a converter that boosts the direct current voltage supplied to the inverter to the output voltage of the battery 51 or higher.

The motor generator 53 is, for example, a three-phase alternating-current synchronous motor in which permanent magnets are embedded in a rotor. The motor generator 53 is driven by the PCU 52 so as to generate a rotational driving force. The driving force generated by the motor generator 53 is transmitted to a driving wheel 531 via a transmission gear (not illustrated).

The connection port 54 is configured to be connectable with a connector of a charging cable provided in the contact charging/discharging equipment 20 (FIG. 1). The connection port 54 is covered with the lid 55 when contact charging/discharging is not performed. The lid 55 has a lock mechanism (not illustrated). The lock mechanism switches between a locked state and an unlocked state, for example, in conjunction with locking of a door of the vehicle 50. The locking mechanisms can also be configured to be individually controllable. When contact charging/discharging is performed, the lid 55 is opened and the connector of the charging cable is connected to the connection port 54. Contact charging/discharging may be alternating current charging/discharging in which alternating current (AC) power is exchanged between the vehicle 50 and the outside of the vehicle, or may be direct current charging/discharging in which direct current (DC) power is exchanged between the vehicle 50 and the outside of the vehicle.

The coil 56 is arranged on an under surface of a floor panel of the vehicle 50, for example. The coil 56 exchanges power with the coil 32 (FIG. 1) of the non-contact charging/discharging equipment 30 through a magnetic field. A rectifier for rectifying power and a DC/DC converter may be included between the coil 56 and the battery 51.

The ECU 57 includes a central processing unit (CPU), a memory, and an input/output port through which various signals are input/output (all not illustrated). The ECU 57 receives signals from sensors and the like, outputs control signals to each device, and controls each device. These controls are not limited to processing by software, and can also be processed by constructing dedicated hardware (electronic circuit). The ECU 57 charges and discharges the battery 51 in response to the demand response from the EMS server 100.

The communication device 58 is configured to allow two-way communication with the EMS server 100. Communication between the communication device 58 and the communication device 130 of the EMS server 100 is performed by wireless communication, for example. In addition, the communication device 58 is configured to be capable of two-way communication with a smartphone 600 owned by the user of the vehicle 50. Information of the smartphone 600 is registered in advance in a memory of the ECU 57 or a storage device (not illustrated) of the vehicle 50, for example. Communication between the communication device 58 and the smartphone 600 is performed, for example, by wireless communication.

Predetermined application software (hereinafter also simply referred to as "application") is installed in the smartphone 600. When the application is started, a screen (VPP participation application form) for setting a VPP participation condition is displayed on a display screen of the smartphone 600.

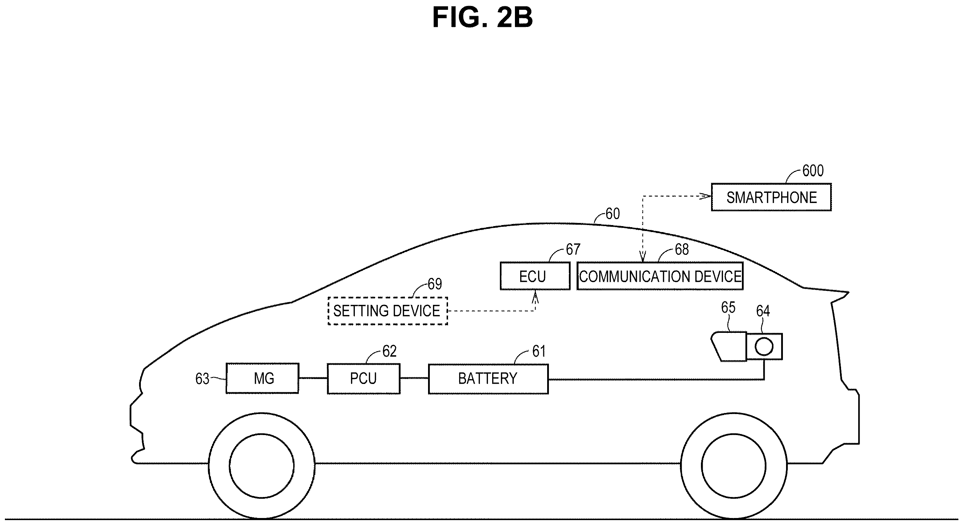

FIG. 2B is a diagram illustrating a configuration example of a vehicle 60 compatible only with the contact charging/discharging method. The vehicle 60 includes a battery 61, a PCU 62, a motor generator 63, a connection port 64, a lid 65, an ECU 67, and a communication device 68. The battery 61, the PCU 62, the motor generator 63, the connection port 64, the lid 65, the ECU 67, and the communication device 68 are basically similar to the battery 51, the PCU 52, the motor generator 53, the connection port 54, the lid 55, the ECU 57, and the communication device 58 of the vehicle 50, so descriptions thereof will not be repeated.

In the vehicle 60, the communication device 68 is configured to allow two-way communication with the smartphone 600 owned by the user of the vehicle 60. Information of the smartphone 600 is registered in advance in a memory of the ECU 67 or a storage device (not illustrated) of the vehicle 60, for example. Communication between the communication device 68 and the smartphone 600 is performed by wireless communication, for example.

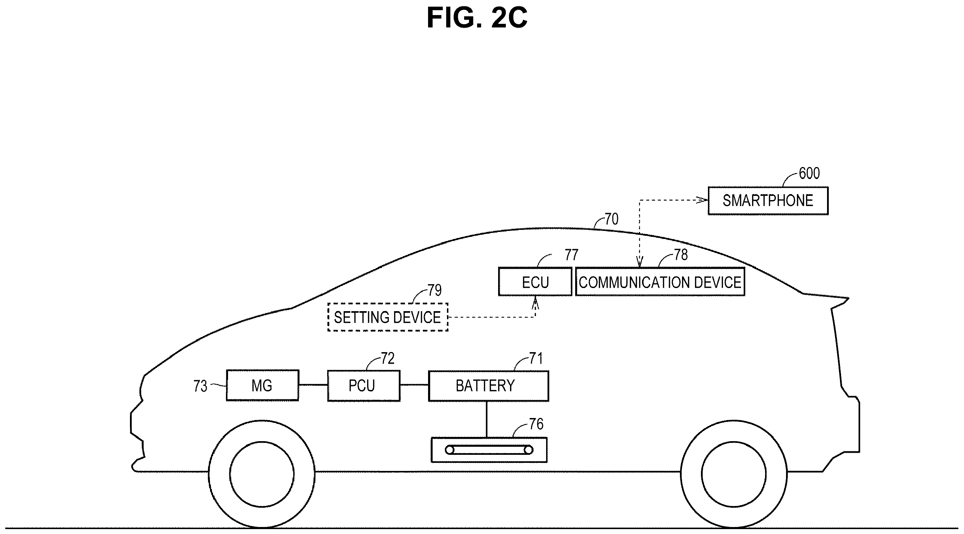

FIG. 2C is a diagram illustrating a configuration example of a vehicle 70 compatible only with the non-contact charging/discharging method. The vehicle 70 includes a battery 71, a PCU 72, a motor generator 73, a coil 76, an ECU 77, and a communication device 78. The battery 71, the PCU 72, the motor generator 73, the coil 76, the ECU 77, and the communication device 78 are basically the same as to the battery 51, the PCU 52, the motor generator 53, the coil 56, the ECU 57, and the communication device 58 of the vehicle 50, so descriptions thereof will not be repeated.

In the vehicle 70, the communication device 78 is configured to allow two-way communication with the smartphone 600 owned by the user of the vehicle 70. Information of the smartphone 600 is registered in advance in a memory of the ECU 77 or a storage device (not illustrated) of the vehicle 70, for example. Communication between the communication device 78 and the smartphone 600 is performed by wireless communication, for example.

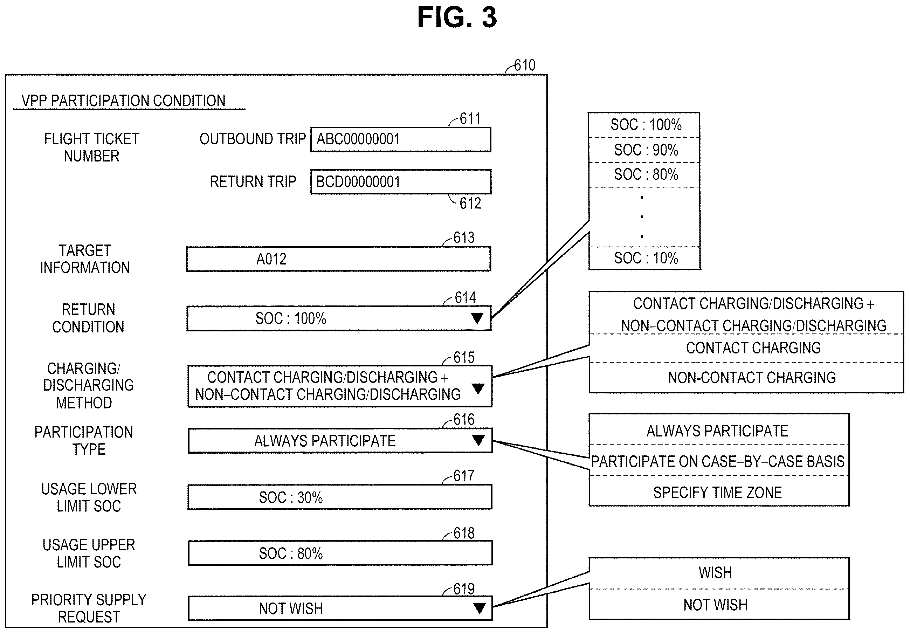

FIG. 3 is a diagram illustrating an example of a VPP participation application form 610 displayed on the display screen of the smartphone 600. The VPP participation application form 610 includes an input field 611 for an outbound flight ticket number, an input field 612 for a return flight ticket number, an input field 613 for target information, an input field 614 for a return condition, an input field 615 for a charging/discharging method, an input field 616 for participation type, an input field 617 for usage lower limit state of charge (SOC), an input field 618 for usage upper limit SOC, and an input field 619 for a priority supply request. The contents input to the VPP participation application form 610 (input fields 611 to 619) are transmitted to the EMS server 100 as information indicating VPP participation conditions.

The input field 611 for the outbound flight ticket number is a field for inputting the outbound flight ticket number. For example, the user of the vehicle 50 (60, 70) inputs the acquired flight ticket number for the outbound flight in the input field 611. That is, information which identifies the airplane 15 for the outbound flight boarded by the user of the vehicle 50 (60, 70) is input to the input field 611 for the outbound flight ticket number. In FIG. 3, "ABC00000001" is input to the input field 611 for the outbound flight ticket number. For example, the flight number of the airplane 15 for the outbound flight boarded by the user of the vehicle 50 (60, 70) may be input to the input field 611 for the outbound flight ticket number.

The input field 612 for the return flight ticket number is a field for inputting a return flight ticket number. For example, the user of the vehicle 50 (60, 70) inputs the acquired return flight ticket number to the input field 612. That is, in the input field 612 for the return flight ticket number, information which identifies the airplane 15 for the return flight boarded by the user of the vehicle 50 (60, 70) is input. In FIG. 3, "BCD00000001" is input to the input field 612 for the return flight ticket number. For example, the flight number of the airplane 15 for the return flight boarded by the user of the vehicle 50 (60, 70) may be input to the input field 612 for the return flight ticket number.

As will be described in detail below, the EMS server 100 determines the parking period of the vehicle 50 (60, 70) in the parking lot based on the departure time of the airplane 15 for the outbound flight and the arrival time of the airplane 15 for the return flight. The EMS server 100 determines the parking period as the VPP participation period of the vehicle 50 (60, 70). At least one of the outbound flight ticket number and the return flight ticket number corresponds to an example of the "information on the moving body" and the "identification information" according to the present disclosure.

The input field 613 for target information is a field for inputting information which identifies a participating target in the VPP, that is, the vehicle 50 (60, 70). For example, the user inputs a parking slot number in which the vehicle 50 (60, 70) is parked in the input field 613. In FIG. 3, the parking slot number "A012" is input to the input field 613 for the target information. What is input to the input field 613 is not limited to the parking slot number. In the input field 613, for example, the number of the contact charging/discharging equipment 20 connected to the vehicle 50 (60, 70) or the license plate information of the vehicle 50 (60, 70) may be input.

The input field 614 for the return condition is a field for designating the SOC of the battery 51 (61, 71) at the end of VPP participation. The input field 614 for the return condition allows selection of SOC 10% to 100% in increments of 10% using a pull-down system. For example, when it is desired to specify an SOC that is not included in the pull-down selection, such as SOC 75%, the SOC can be specified by directly inputting the SOC.

The input field 615 for the charging/discharging method is a field for designating the charging/discharging method during VPP participation. The input field 615 for the charging/discharging method allows selection of one of "contact charging/discharging + non-contact charging/discharging", "contact charging/discharging", and "non-contact charging/discharging" by a pull-down system. "Contact charging/discharging + non-contact charging/discharging" indicates that both charging/discharging by the contact charging/discharging equipment 20 and charging/discharging by the non-contact charging/discharging equipment 30 are possible. "Contact charging/discharging" indicates that only charging/discharging by the contact charging/discharging equipment 20 is possible. "Non-contact charging/discharging" indicates that only charging/discharging by the non-contact charging/discharging equipment 30 is possible.

For example, the user of the vehicle 50 selects "contact charging/discharging + non-contact charging/discharging". However, the user of the vehicle 50 can also select "contact charging/discharging" or "non-contact charging/discharging". For example, depending on the specifications of the vehicle 50, the unlocking operation (unlocking operation of the lock mechanism) of the lid 55 may be interlocked with the locking of the door. For example, in a situation where a charging/discharging robot is utilized, there may be a user who is concerned about the door being unlocked when the lid 55 is unlocked by the charging/discharging robot. In such a case, the user can select "non-contact charging/discharging". In the case of non-contact charging/discharging, it is possible to participate in the VPP without unlocking the door. Therefore, a user who has concerns as described above can select "non-contact charging/discharging". There may also be a user who desires efficient charging and discharging. Such a user can select "contact charging/discharging".

For example, the user of the vehicle 50 parks the vehicle 50 in the first parking space provided with the non-contact charging/discharging equipment 30 and selects "contact charging/discharging + non-contact charging/discharging" in the input field 615 for the charging/discharging method in the VPP participation application form 610. In this case, for example, when creating a demand response, the EMS server 100 may determine whether to request contact charging/discharging or non-contact charging/discharging from the other vehicles (compatible charging/discharging methods) parked in the parking lot and the availability of the contact charging/discharging equipment 20 to the vehicle 50. The user of the vehicle 50 can park the vehicle 50 in the second parking space and select "contact charging/discharging" in the input field 615 for the charging/discharging method in the VPP participation application form 610. In addition, the user of the vehicle 50 can park the vehicle 50 in the first parking space and select "non-contact charging/discharging" in the input field 615 for the charging/discharging method in the VPP participation application form 610. In this case, the EMS server 100 creates a demand response based on the selected charging/discharging method.

The user of the vehicle 60 selects "contact charging/discharging" in the input field 615 for the charging/discharging method. In the VPP participation application form displayed on the smartphone 600 of the user of the vehicle 60, only "contact charging/discharging" may be selectable. The user of the vehicle 70 selects "non-contact charging/discharging" in the input field 615 for the charging/discharging method. In the VPP participation application form displayed on the smartphone 600 of the user of the vehicle 70, only "non-contact charging/discharging" may be selectable.

The input field 616 for the participation type is a field for designating the type of VPP participation in the parking period of the vehicle 50 (60, 70). The input field 616 for the participation type allows selection of any one of "always participate", "participate on case-by-case basis", and "specify time zone" in a pull-down system. "Always participate" indicates that the vehicle always participates in the VPP during the parking period of the vehicle 50 (60, 70). "Participate on case-by-case basis" indicates that an inquiry as to whether to participate is received each time a demand response (DR) is transmitted from the EMS server 100. When "participate on case-by-case basis" is designated, for example, the EMS server 100 sends an inquiry to the smartphone 600 of the user as to whether to participate each time a demand response is created. "Specify time zone" indicates that the time zone for participating in the VPP is specified. When "specify time zone" is designated, a field (not illustrated) for inputting a time zone is displayed on the VPP participation application form 610 as well.

The input field 617 for the usage lower limit SOC is a field for specifying the lower limit SOC during VPP participation. The input field 618 for the usage upper limit SOC is a field for specifying the upper limit SOC during VPP participation. From the viewpoint of suppressing deterioration of the battery 51 (61, 71), it may be desired to set the lower limit SOC and/or the upper limit SOC. In such a case, when the user specifies the lower limit SOC, the contact charging/discharging equipment 20 or the non-contact charging/discharging equipment 30 controls charging/discharging such that the SOC of the battery 51 (61, 71) does not fall below the specified lower limit SOC during VPP participation. In addition, when the user specifies the upper limit SOC, the contact charging/discharging equipment 20 or the non-contact charging/discharging equipment 30 controls charging/discharging such that the SOC of the battery 51 (61, 71) does not exceed the specified upper limit SOC during VPP participation. When the input field 617 for the usage lower limit SOC is left blank, SOC 0% may be set as the lower limit SOC. When the input field 618 for the usage upper limit SOC is left blank, the SOC 100% may be set as the upper limit SOC.

The input field 619 for the priority supply request is a field for designating whether the user of the vehicle 50 (60, 70) wishes to supply power from the battery 51 (61, 71) of the vehicle 50 (60, 70) to the airplane 15 boarded by the user of the vehicle 50 (60, 70). The input field 619 for the priority supply request allows selection of either "desired" or "not desired" in a pull-down system. "Desired" indicates that the user of the vehicle 50 (60, 70) wishes to supply the power of the battery 51 (61, 71) to the airplane 15 which the user is on board. "Not desired" indicates that the user of the vehicle 50 (60, 70) does not wish to supply the power of the battery 51 (61, 71) to the airplane 15 which the user is on board.

The EMS server 100 regards the parking period of the vehicle 50 (60, 70) as the VPP participation period. Specifically, the EMS server 100 defines the parking period of the vehicle 50 (60, 70) as the period from the departure time of the outbound flight to the arrival time of the return flight, and sets this as the VPP participation period. When "desired" is selected in the input field 619 for the priority supply request, for example, the EMS server 100 manages the power supplied from the vehicle 50 (60, 70) until the departure time of the outbound flight is allocated to the airplane 15 boarded by the user of the vehicle 50 (60, 70). That is, the power of the battery 51 (61, 71) is supplied to the airplane 15 boarded by the user until the departure time of the outbound flight passes.

The VPP participation condition may be set from the vehicle 50 (60, 70). Referring again to FIGS. 2A to 2C, the vehicles 50, 60, 70 may further include setting devices 59, 69, and 79, respectively. The setting device 59 (69, 79) is a device for setting a VPP participation condition. The setting device 59 (69, 79) includes a display screen. The setting device 59 (69, 79) may be provided as a single device, or may be one of the functions of a navigation device or a multi-information system, for example.

A VPP participation application form is displayed on the display screen of the setting device 59 (69, 79). The VPP participation application form displayed on the setting device 59 (69, 79) may be similar to the VPP participation application form 610 illustrated in FIG. 3. Information input to the VPP participation application form is output to the communication device 58 (68, 78) via the ECU 57 (67, 77). The communication device 58 (68, 78) transmits the information input into the VPP participation application form to the EMS server 100 as information which shows a VPP participation condition.

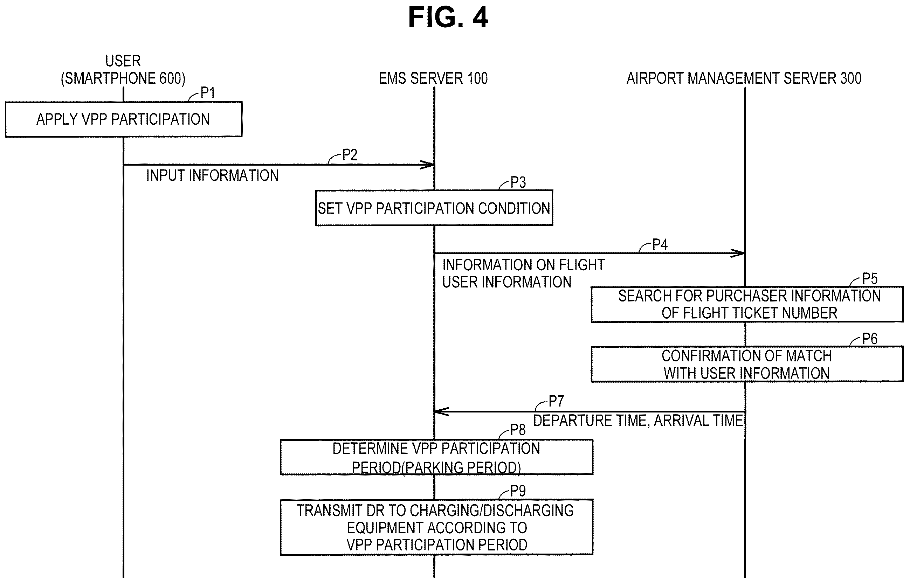

FIG. 4 is a sequence diagram outlining an exchange of information between the smartphone 600, the EMS server 100, and the airport management server 300. Referring to FIG. 4, the user of the vehicle 50 applies for participation in the VPP by inputting various pieces of information from the VPP participation application form 610 (FIG. 3) on the smartphone 600 at P1. The smartphone 600 transmits the input information input from the VPP participation application form 610 to the EMS server 100 in process P2.

The EMS server 100 sets VPP participation conditions (specification of target vehicle, various SOC conditions of battery 51, charging/discharging method, VPP participation type, and the like) for the user based on the input information acquired from the smartphone 600 in process P3.

Then, in process P4, the EMS server 100 transmits to the airport management server 300 the information on the flight boarded by the user and the input person information (user information) of the information indicating the VPP participation conditions input to the VPP participation application form 610. The information on the flight includes, for example, each piece of information of the flight ticket number of the outbound flight and/or the flight ticket number of the return flight. User information includes, for example, user's name information, vehicle information.

When the airport management server 300 receives the outbound flight ticket number and/or return flight ticket number information and the user information, the airport management server 300 searches for purchaser information of the outbound flight ticket number and/or the return flight ticket number from the database in process P5. Then, in process P6, the airport management server 300 checks whether the user specified by the user information matches the purchaser of the flight ticket, and then if they match, in process P7, each piece of information of the departure time of the airplane specified by the outbound flight ticket number and the arrival time of the airplane specified by the return flight ticket number is transmitted to the EMS server 100.

When the user specified by the user information is not included in the purchaser information, the airport management server 300 transmits a message to that effect to the EMS server 100, and VPP participation according to the VPP participation application is postponed.

When the EMS server 100 acquires each piece of information on the departure time and arrival time of the airplane boarded by the user from the airport management server 300, in process P8, based on the acquired information on the departure time and arrival time, the parking period of the vehicle 50 in the parking lot is set, and the parking period is set as the VPP participation period of the vehicle 50.

Then, the EMS server 100 creates a demand response based on a supply and demand request, and in process P9, the EMS server 100 transmits a demand response to the charging/discharging equipment (contact charging/discharging equipment 20 or non-contact charging/discharging equipment 30) corresponding to the charging/discharging method (selection method will be described below) selected based on the VPP participation conditions, according to the set VPP participation period.

### Functional Block

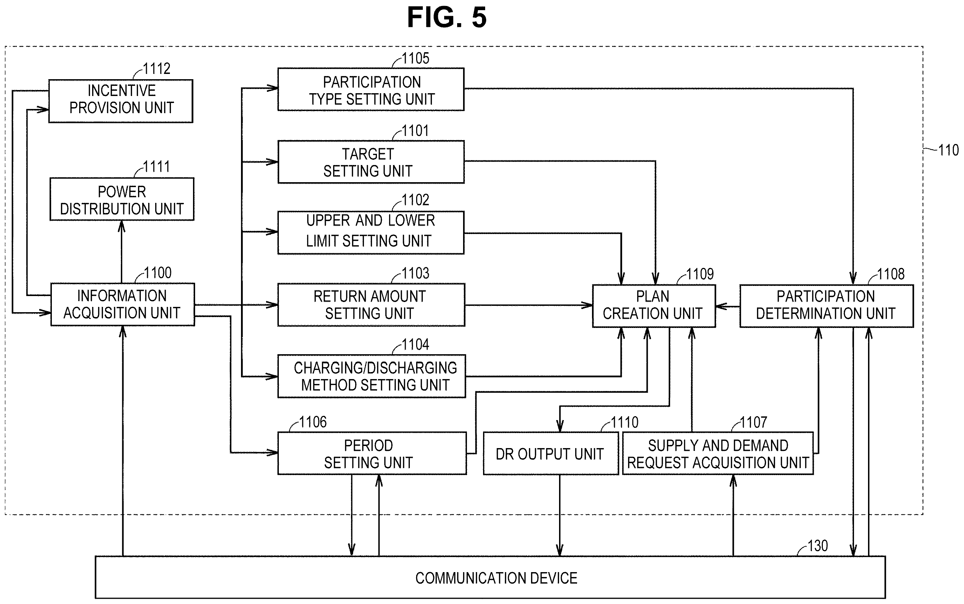

FIG. 5 is a functional block diagram of a control device 110 of the EMS server 100. Referring to FIG. 5, the control device 110 of the EMS server 100 includes an information acquisition unit 1100, a target setting unit 1101, an upper and lower limit setting unit 1102, a return amount setting unit 1103, a charging/discharging method setting unit 1104, a participation type setting unit 1105, a period setting unit 1106, a supply and demand request acquisition unit 1107, a participation determination unit 1108, a plan creation unit 1109, a DR output unit 1110, a power distribution unit 1111, and an incentive provision unit 1112. The control device 110 functions as the information acquisition unit 1100, the target setting unit 1101, the upper and lower limit setting unit 1102, the return amount setting unit 1103, the charging/discharging method setting unit 1104, the participation type setting unit 1105, the period setting unit 1106, the supply and demand request acquisition unit 1107, the participation determination unit 1108, the plan creation unit 1109, the DR output unit 1110, the power distribution unit 1111, and the incentive provision unit 1112 by executing programs stored in a storage device 120, for example. The information acquisition unit 1100, the target setting unit 1101, the upper and lower limit setting unit 1102, the return amount setting unit 1103, the charging/discharging method setting unit 1104, the participation type setting unit 1105, the period setting unit 1106, the supply and demand request acquisition unit 1107, the participation determination unit 1108, the plan creation unit 1109, the DR output unit 1110, the power distribution unit 1111, and the incentive provision unit 1112 may be implemented by dedicated hardware (electronic circuit), for example.

The information acquisition unit 1100 acquires various pieces of information input to the VPP participation application form from the smartphone 600 of the user. Specifically, the information acquisition unit 1100 acquires outbound flight ticket number information, return flight ticket number information, target information, return condition information, charging/discharging method information, participation type information, usage lower limit SOC information, usage upper limit SOC information, and priority supply request information. The information acquisition unit 1100 outputs the target information to the target setting unit 1101, outputs the usage lower limit SOC information and the usage upper limit SOC information to the upper and lower limit setting unit 1102, outputs the return condition information to the return amount setting unit 1103, outputs the charging/discharging method information to the charging/discharging method setting unit 1104, outputs the participation type information to the participation type setting unit 1105, outputs the outbound flight ticket number information and the return flight ticket number information to the period setting unit 1106, and outputs the priority supply request information to the power distribution unit 1111. In addition, in the description of FIG. 5 below, when describing a specific example, it is assumed that various pieces of information input to the VPP participation application form 610 are obtained.

The target setting unit 1101 sets a target vehicle to participate in the VPP based on the target information. The target information is, for example, a parking slot number. In the following description, the target setting unit 1101 sets the vehicle 50 parked in the parking slot number "A012" as the target vehicle to participate in the VPP. The target setting unit 1101 outputs to the plan creation unit 1109 information (may be a parking slot number) which identifies the set target.

The upper and lower limit setting unit 1102 sets the lower limit value of the SOC of the battery 51 of the vehicle 50 during VPP participation based on the usage lower limit SOC information. For example, when the usage lower limit SOC information indicates SOC 30%, the upper and lower limit setting unit 1102 sets the lower limit value of SOC to SOC 30%. In addition, the upper and lower limit setting unit 1102 sets the upper limit value of the SOC of the battery 51 during VPP participation based on the usage upper limit SOC information. For example, when the usage upper limit SOC information indicates SOC 80%, the upper and lower limit setting unit 1102 sets the upper limit value of SOC to SOC 80%. The upper and lower limit setting unit 1102 outputs information indicating the set lower limit value and upper limit value to the plan creation unit 1109.

The return amount setting unit 1103 sets the SOC (hereinafter also referred to as "return SOC") of the battery 51 at the end of the VPP participation (at the end of the parking period) based on the return condition information. For example, when the return condition information indicates SOC 100%, the return amount setting unit 1103 sets the return SOC to SOC 100%. The return amount setting unit 1103 outputs information indicating the set return SOC to the plan creation unit 1109. Although the details will be described below, the end of the VPP participation may be, for example, the time when the airplane 15 for the return flight boarded by the user of the vehicle 50 arrives at the airport facility 10, that is, the end of the parking period.

The charging/discharging method setting unit 1104 sets the charging/discharging method when participating in the VPP based on the charging/discharging method information. For example, when the charging/discharging method information indicates "contact charging/discharging + non-contact charging/discharging", the charging/discharging method setting unit 1104 sets the charging/discharging method to contact charging/discharging and non-contact charging/discharging. In this case, the vehicle 50 may participate in the VPP by either contact charging/discharging or non-contact charging/discharging. For example, when the charging/discharging method information indicates "contact charging/discharging", the charging/discharging method setting unit 1104 sets the charging/discharging method to contact charging/discharging. For example, when the charging/discharging method information indicates "non-contact charging/discharging", the charging/discharging method setting unit 1104 sets the charging/discharging method to non-contact charging/discharging. The charging/discharging method setting unit 1104 outputs information indicating the set charging/discharging method to the plan creation unit 1109.

The participation type setting unit 1105 sets the participation type to the VPP based on the participation type information. For example, when the participation type information indicates "always participate", the participation type setting unit 1105 sets the participation type to the participating always in which the vehicle 50 always participates in the VPP while the vehicle 50 is parked. For example, when the participation type information indicates "participation on case-by-case basis", the participation type setting unit 1105 sets the participation type to the participating on the case-by-case basis in which each time a demand response (DR) is created, the user is asked whether to respond to the DR (whether to participate in the VPP). For example, when the participation type information indicates "specify time zone", the participation type setting unit 1105 sets the participation type to the specifying time zone in which the vehicle 50 participates in the VPP only in the specified time zone. The participation type setting unit 1105 outputs information indicating the set participation type to the participation determination unit 1108.

The period setting unit 1106 transmits the outbound flight ticket number information and the return flight ticket number information to the airport management server 300 (FIG. 1) via the communication device 130. The airport management server 300 reads the departure time of the airplane specified by the outbound flight ticket number and the arrival time of the airplane specified by the return flight ticket number from a database (not illustrated) and transmits them to the EMS server 100. The period setting unit 1106 acquires the departure time of the outbound flight and the arrival time of the return flight from the airport management server 300. The acquired departure time of the outbound flight is the departure time of the outbound flight boarded by the user, and the acquired arrival time of the return flight is the arrival time of the return flight boarded by the user. The period setting unit 1106 sets the parking period of the vehicle 50 in the parking lot based on the departure time of the outbound flight and the arrival time of the return flight. Specifically, the period setting unit 1106 sets the departure time of the outbound flight as the beginning (start time) of the parking period, and sets the arrival time of the return flight as the end (end time) of the parking period. The period setting unit 1106 sets the parking period to the VPP participation period of the vehicle 50. The period setting unit 1106 outputs the set parking period to the plan creation unit 1109 as the VPP participation period.

The supply and demand request acquisition unit 1107 receives a power supply and demand request from the power transmission and distribution operator server 200 (FIG. 1) via the communication device 130. The supply and demand request includes a supply request requesting that power be supplied from the microgrid MG to the electrical grid PG, or a power reception request requesting that the microgrid MG receives power from the electrical grid PG. The supply and demand request further includes request period information. The supply and demand request acquisition unit 1107 may also receive a supply and demand request for power from the airport management server 300. The supply and demand request acquisition unit 1107 outputs the supply and demand request to the participation determination unit 1108 and the plan creation unit 1109.

The participation determination unit 1108 determines whether to utilize the vehicle 50 (whether to include the vehicle 50 in the plan) for this supply and demand request based on the information indicating the participation type received from the participation type setting unit 1105. The participation determination unit 1108 determines to utilize the vehicle 50 for this supply and demand request when the information indicating the participation type is "always participate". However, for example, when the SOC of the battery 51 is already at the lower limit value when a supply request is received, or when the SOC of the battery 51 is already at the upper limit value when a power reception request is received, the participation determination unit 1108 may determine not to utilize the vehicle 50 for this supply and demand request.

Moreover, when the information indicating that the participation type is "participate on case-by-case basis", the participation determination unit 1108 inquires of the user's smartphone 600 via the communication device 130 whether to respond to this supply and demand request. When the participation determination unit 1108 receives a reply from the smartphone 600 of the user indicating that the supply and demand request will be responded to, the participation determination unit 1108 determines to utilize the vehicle 50 for the supply and demand request. On the other hand, when a response is received from the smartphone 600 of the user indicating that the user will not respond to the supply and demand request, or when there is no response within a predetermined period of time, the participation determination unit 1108 determines not to utilize the vehicle 50 for the supply and demand request.

Further, when the information indicating that the participation type is "specify time zone", the participation determination unit 1108 determines whether the specified time zone (the time zone input to the VPP participation application form 610) is included in the request period of the supply and demand request. When the specified time zone is included in the request period, the participation determination unit 1108 determines to utilize the vehicle 50 for the supply and demand request. On the other hand, when the specified time zone is not included in the request period, the participation determination unit 1108 determines not to utilize the vehicle 50 for supply and demand requests. The participation determination unit 1108 outputs to the plan creation unit 1109 information indicating whether the vehicle 50 can be utilized for the determined supply and demand request.

The plan creation unit 1109 creates a demand response for the distributed power source group 400. For example, the plan creation unit 1109 creates a demand response when receiving a supply and demand request acquired by the supply and demand request acquisition unit 1107 from the supply and demand request acquisition unit 1107. Alternatively, the plan creation unit 1109 may create a demand response in order to adjust the supply and demand of the microgrid MG according to a contract agreed with the power company, even without such a supply and demand request.

For example, when the plan creation unit 1109 receives a supply and demand request from the supply and demand request acquisition unit 1107, it creates a demand response based on the received supply and demand request. Specifically, the plan creation unit 1109 creates a down DR or an up DR so as to satisfy the supply and demand request received from the supply and demand request acquisition unit 1107. For example, when the supply and demand request is a request for power supply to the electrical grid PG, the plan creation unit 1109 creates a down DR such that the requested power supply amount can be supplied from the microgrid MG to the electrical grid PG. For example, when the supply and demand request is a power reception request for power from the electrical grid PG, the plan creation unit 1109 creates an up DR such that the microgrid MG can receive the requested power reception amount from the electrical grid PG. In creating the down DR or the up DR, the plan creation unit 1109 selects the power adjustment resource to be used according to the determination (information indicating availability of use) of the participation determination unit 1108. The plan creation unit 1109 outputs the created demand response to the DR output unit 1110.

The DR output unit 1110 transmits the demand response created by the plan creation unit 1109 to the distributed power source group 400 via the communication device 130. For example, a demand response transmitted to the vehicle 50 is transmitted to the contact charging/discharging equipment 20 or the non-contact charging/discharging equipment 30. The contact charging/discharging equipment 20 or the non-contact charging/discharging equipment 30 receives power from the vehicle 50 (battery 51) or supplies power to the vehicle 50 (battery 51) according to the demand response.

The power distribution unit 1111 determines whether the user of the vehicle 50 desires priority supply based on the information on the priority supply request. When the user of the vehicle 50 desires priority supply, the power distribution unit 1111 controls each part of the microgrid MG such that power supplied from the vehicle 50 is supplied to the airplane specified by the information which identifies the airplane.

The incentive provision unit 1112 provides an incentive to the vehicle that responds to the demand response. The incentive provision unit 1112 may acquire a response result from the vehicle, for example, via the communication device 130. The response result includes, for example, information indicating whether the demand response has been responded to, and the amount of power charged and discharged by the vehicle. The incentive may be given according to the amount of power charged and discharged in response to the demand response, for example. The incentive may be, for example, a parking fee discount. Further, for example, the incentive may be such that the parking fee for the vehicle participating in the VPP is free during the parking period of the vehicle.

### Flowchart

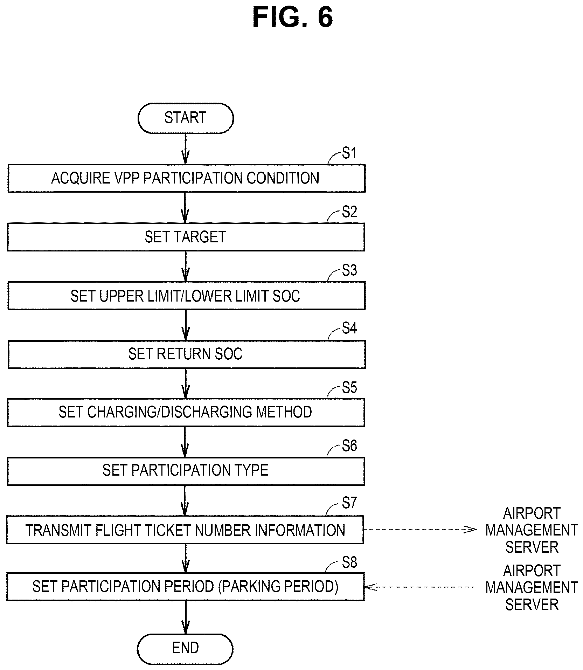

FIG. 6 is a flowchart illustrating a procedure of VPP participation condition setting processing. The processing of the flowchart illustrated in FIG. 6 is executed by the control device 110 of the EMS server 100 when the information input to the VPP participation application form is received from the smartphone. Although each step (hereinafter, step is abbreviated as "S") of the flowchart illustrated in FIG. 6 will be described as being realized by software processing by the control device 110, a part or all of it may be realized by hardware (electronic circuit) manufactured in the control device 110. In the following description, it is assumed that information indicating VPP participation conditions input to the VPP participation application form 610 is acquired from the smartphone 600 associated with the vehicle 50.

In S 1, the control device 110 acquires from the smartphone 600 various pieces of information (information indicating VPP participation conditions) input to the VPP participation application form 610. The various pieces of information include the outbound flight ticket number information, the return flight ticket number information, the target information, the return condition information, the charging/discharging method information, the participation type information, the usage lower limit SOC information, the usage upper limit SOC information, and the priority supply request information.

In S2, the control device 110 sets the vehicle 50 specified based on the target information as the target vehicle to participate in the VPP.

In S3, the control device 110 sets the lower limit value of the SOC of the battery 51 while participating in the VPP based on the usage lower limit SOC information. In addition, the control device 110 sets the upper limit value of the SOC of the battery 51 while participating in the VPP based on the usage upper limit SOC information.

In S4, the control device 110 sets the SOC (return SOC) of the battery 51 at the end (end of the parking period) of the VPP participation based on the return condition information.

In S5, the control device 110 sets the charging/discharging method when participating in the VPP based on the charging/discharging method information.

In S6, the control device 110 sets the VPP participation type based on the participation type information.

In S7, the control device 110 transmits the outbound flight ticket number information and the return flight ticket number information to the airport management server 300 via the communication device 130.

In S8, the control device 110 acquires, from the airport management server 300 via the communication device 130, the departure time of the flight (outbound flight boarded by the user) specified by the outbound flight ticket number and the arrival time of the flight (return flight boarded by the user) specified by the return flight ticket number. The control device 110 sets the parking period of the vehicle 50 in the parking lot based on the departure time of the outbound flight and the arrival time of the return flight. The control device 110 sets the parking period as the VPP participation period of the vehicle 50.

The order of processing from S2 to S8 is not limited to the above, and can be changed as appropriate.

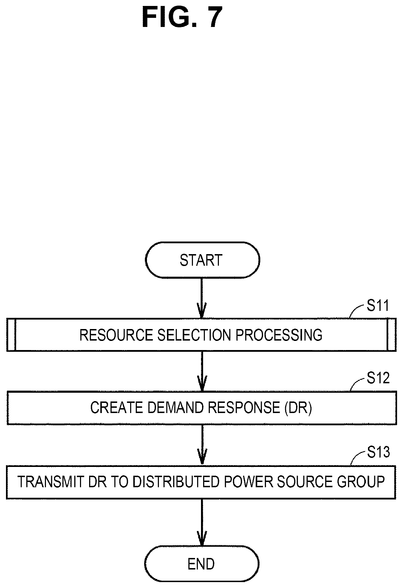

FIG. 7 is a flowchart illustrating a procedure of processing for creating a demand response based on a set VPP participation condition. The processing of this flowchart is executed by the control device 110 of the EMS server 100 when a supply and demand request is received from the power transmission and distribution operator server 200 (or airport management server 300), or when the supply and demand adjustment of the microgrid MG is performed according to the contract agreed with the power company.

In S 11, the control device 110 executes selection processing for selecting a power adjustment resource to respond to the demand response when creating the demand response based on the set VPP participation condition.

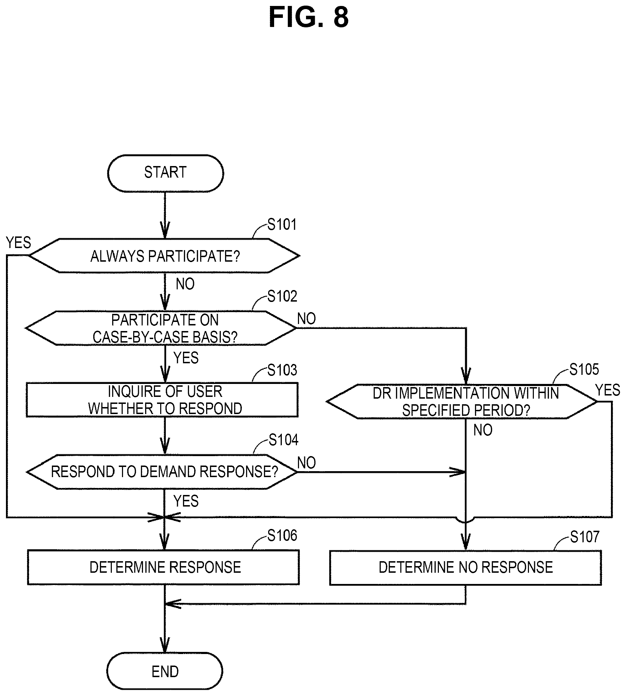

FIG. 8 is a flowchart illustrating detailed processing of the selection processing. The selection processing is determined based on the participation type set in S6 of the flowchart of FIG. 6. The selection processing of FIG. 8 is executed for each target vehicle.

In S101, the control device 110 determines whether the participation type set in S6 of the flowchart of FIG. 6 is "always participate". When the set participation type is "always participate" (YES in S101), the control device 110 advances the process to S106. When the set participation type is not "always participate" (NO in S101), the control device 110 advances the process to S102.

In S102, the control device 110 determines whether the set participation type is "participate on case-by-case basis". When the set participation type is "participate on case-by-case basis" (YES in S102), the control device 110 advances the process to S103. When the set participation type is not "participate on case-by-case basis" (NO in S102), the control device 110 advances the process to S105.

In S103, the control device 110 inquires of the smartphone 600 owned by the user of the vehicle 50 whether to respond to the current demand response, and acquires the response.

In S104, the control device 110 determines whether the user has selected to respond to the demand response. Specifically, when the control device 110 receives a response from the smartphone 600 indicating that the user will respond to the demand response (YES in S104), the process proceeds to S106. When the control device 110 receives a response from the smartphone 600 indicating that the user will not respond to the demand response (NO in S104), the process proceeds to S107. The control device 110 advances the process to S107 even when it does not receive a reply within a predetermined period of time after transmitting the inquiry.

In S105, the control device 110 determines whether the time zone (the time zone that the user expresses his or her desire to participate in the VPP) input to the participation application form is included in a demand response implementation period. The control device 110 advances the process to S106 when the demand response implementation period includes the time zone that the user expresses his or her desire to participate in the VPP (YES in S105). The control device 110 advances the process to S107 when the demand response implementation period does not include the time zone that the user expresses his or her desire to participate in the VPP (NO in S105).

In S106, the control device 110 determines to utilize (respond to) the vehicle 50 for this demand response.

In S107, the control device 110 determines not to utilize (do not respond) the vehicle 50 for this demand response.

Referring again to FIG. 7, in S12, the control device 110 creates an operation plan (operation plan for distributed power source group 400) for the microgrid MG based on the supply and demand request or contract with the power company, and creates a demand response. For example, when receiving a request to supply power to the electrical grid PG, the control device 110 creates an operation plan such that the required power supply amount can be supplied from the microgrid MG to the electrical grid PG, and creates a down DR based on this operation plan. For example, when receiving a request to receive power from the electrical grid PG, the control device 110 creates an operation plan such that the microgrid MG can receive the requested power reception amount from the electrical grid PG, and creates an up DR based on this operation plan. In creating the demand response, the control device 110 selects the power adjustment resource to be used in accordance with the determination (information indicating availability of use) in S11.

In S13, the control device 110 transmits the demand response to the distributed power source group 400 via the communication device 130. A demand response for the vehicle 50 is transmitted to the contact charging/discharging equipment 20 or the non-contact charging/discharging equipment 30. During the demand response implementation period, the control device 110 may transmit the demand response to the distributed power source group 400 at a predetermined cycle, or may transmit the demand response including the charging/discharging schedule to the distributed power source group 400. When the charging/discharging schedule is transmitted, each unit of the distributed power source group 400 performs charging/discharging according to the charging/discharging schedule. The vehicle charges and discharges the battery according to instructions from the contact charging/discharging equipment 20 or the non-contact charging/discharging equipment 30.

As described above, in the power system 1 according to the present embodiment, a vehicle parked in the parking lot attached to the airport facility 10 is utilized as a distributed power source. The vehicle parked in the parking lot charges and discharges its battery in response to a demand response from the EMS server 100 during the parking period. Vehicles parked in the parking lot attached to the airport facility 10 are assumed to be parked continuously for a relatively long period of time, such as several hours to several days. According to the power system 1 of the present embodiment, vehicles parked in a parking lot can be appropriately utilized as distributed power sources in a VPP, and the spread of a VPP can be promoted.

In addition, the user can set the lower limit value and upper limit value of the SOC of the battery in response to the demand response. As a result, it is possible to participate in the VPP while taking battery degradation into consideration. Therefore, it is possible to promote the participation of vehicles in the VPP.

In addition, the user can set the return SOC in response to the demand response. As a result, it is possible to prevent the user arriving at the airport facility 10 from being inconvenienced due to the fact that the vehicle 50 cannot be used immediately due to the insufficient SOC of the battery 51.

In addition, the user can set the charging/discharging method in response to the demand response. For example, when a charging/discharging robot is used, the door may be unlocked when the charging/discharging robot performs a lid unlocking operation. By setting the charging/discharging method, it is possible to avoid contact charging/discharging that accompanies the lid unlocking operation, and to respond to the demand response by non-contact charging. This can promote participation of the vehicle in the VPP. The vehicle gives the EMS server 100 the control right to open and close the lid during the parking period. As a result, the charging/discharging robot according to the command from the EMS server 100 can unlock the lid of the parked vehicle.

In addition, the EMS server 100 gives incentives to vehicles participating in the VPP during the parking period. This can promote participation of the vehicle in the VPP.

### First Modification Example

Arrival and departure times of a flight may change from the originally scheduled time due to various circumstances. Changes in the arrival and departure times of flights can affect the parking period of a vehicle. When there is a change in the arrival time of the return flight, the parking period of the vehicle may change. For example, when the return SOC is set to SOC 100%, and the arrival and departure times are earlier than the scheduled times, there is a possibility that the operation plan will be corrected such that the parking period will be shorter. In addition, when the arrival and departure times are later than the scheduled times, the parking period will be extended, and the battery will be left unattended at full charge (SOC 100%) for a longer period of time. This can lead to deterioration of the battery. Therefore, in the first modification example, an example will be described in which the parking period (that is, the VPP participation period) of the vehicle is changed in accordance with the delay in the arrival and departure times of the flight.

The control device 110 of the EMS server 100 is linked with the airport management server 300 to monitor arrival/departure delays of flights. The control device 110 of the EMS server 100 inquires of the airport management server 300 via the communication device 130 whether there is a flight of which the arrival/departure is delayed/is to be delayed at a predetermined control cycle.

When there is a flight of which the arrival/departure is delayed/is to be delayed, the airport management server 300 transmits to the EMS server 100 information (for example, the flight number described in the flight ticket number) which identifies the flight and an expected time. The expected time may be defined as the scheduled departure time for the flight's departure delay, and as the scheduled arrival time for the flight's arrival delay. Information which identifies the flight corresponds to an example of "information on a moving body" and "identification information" according to the present disclosure.

When the control device 110 of the EMS server 100 acquires the information which identifies the flight of which the arrival/departure is delayed/is to be delayed and the expected time from the airport management server 300 via the communication device 130, the EMS server 100 specifies the vehicle to which the flight specified by the information which identifies the flight is associated with. That is, the control device 110 of the EMS server 100 specifies the vehicle of the user who about to board/ is boarding the specified flight. Then, the control device 110 of the EMS server 100 modifies the parking period (participation period in VPP) of the specified vehicle. Specifically, the control device 110 of the EMS server 100 corrects the departure time/arrival time of the flights specified by the information which identifies the flight to the expected time, and corrects the parking period (participation period in VPP) of the vehicle. Then, the control device 110 of the EMS server 100 creates or modifies the demand response based on the modified VPP participation period of the vehicle.

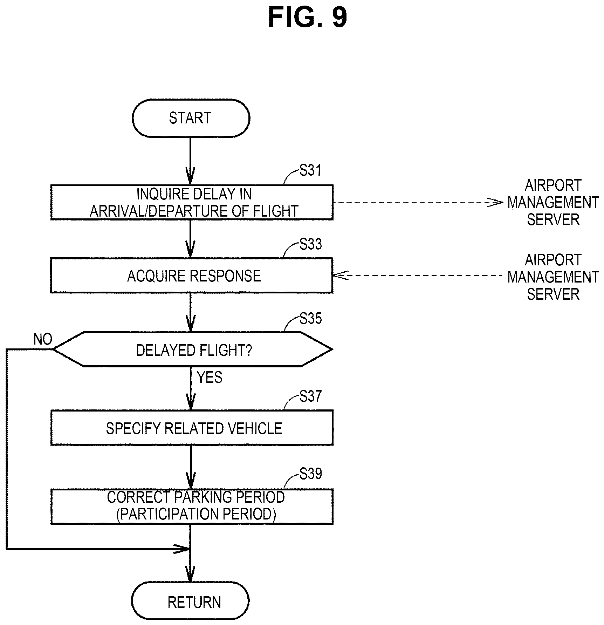

FIG. 9 is a diagram illustrating a procedure of processing for monitoring the arrival/departure delay of a flight, which is executed by the control device 110 of the EMS server 100 according to the first modification example. The processing of the flowchart illustrated in FIG. 9 is repeatedly executed by the control device 110 of the EMS server 100 at a predetermined control cycle.

In S31, the control device 110 inquires of the airport management server 300 via the communication device 130 whether there is a flight of which the arrival/departure is delayed/is to be delayed.

In S33, the control device 110 obtains a response to the inquiry via the communication device 130. When there is a flight of which the arrival/departure is delayed/is to be delayed, the airport management server 300 transmits information which identifies the flight of which the arrival/departure is delayed/is to be delayed and the expected time. On the other hand, when there is no flight of which the arrival/departure is delayed/is to be delayed, the airport management server 300 replies to that effect.

In S35, the control device 110 determines whether there is a flight of which the arrival/departure is delayed/is to be delayed based on the response acquired in S33. When there is no flight of which the arrival/departure is delayed/is to be delayed (NO in S35), the control device 110 advances the process to RETURN. When there is a flight of which the arrival/departure is delayed/is to be delayed (YES in S35), the control device 110 advances the process to S37.

In S37, the control device 110 specifies the vehicle to which the flight specified by the information which identifies the flight acquired in S35 is associated with. That is, the control device 110 specifies the vehicle of the user who about to board/ is boarding the specified flight. The control device 110 specifies the vehicle to which the flight is associated with, for example, based on the information and expected time which identifies the flight and the flight ticket number of the outbound flight or the flight ticket number of the return flight. Specifically, for example, the control device 110 specifies the vehicle associated with to the flight from the flight number specified from the flight ticket number of the outbound flight or the flight ticket number of the return flight, and the information which identifies the flight. In addition, the control device 110 may acquire a flight ticket number from the airport management server 300, specifically for an airplane specified by the information which identifies the airplane.

In S39, the control device 110 corrects the parking period (participation period in VPP) of the vehicle specified in S37. Specifically, the control device 110 corrects the departure time/arrival time of the flight to the expected time, and corrects the parking period (participation period in VPP) of the vehicle.

As described above, in the configuration according to the first modification example, the participation period of the vehicle in the VPP is corrected according to the delay in the arrival and departure times of the flight. Since the participation period in the VPP is corrected, for example, even when there is a delay in the departure time of the outbound flight, the user of the vehicle can use the vehicle until the departure time of the outbound flight. Further, for example, when the arrival time of the return flight is delayed, the participation period in the VPP is extended according to the delay time, such that the vehicle can be used appropriately. In addition, for example, when the arrival time of the return flight is delayed and the return SOC is set to SOC 100%, it is possible to prevent the battery from being left unattended in a fully charged state for a long time. Therefore, deterioration of the battery can be suppressed.

The delay information on arrival and departure times of flights is not limited to being acquired from the airport management server 300. The EMS server 100 may recognize the arrival/departure delay time of flights based on information acquired from an information providing site that provides a service that provides location information of an airplane, or information provided by the user on board the airplane. The information provided by the user on board the airplane may be provided to the EMS server 100 via another server, for example.

### Second Modification Example

In the above-described embodiment and first modification example, an example is described in which the starting time of the participation period in the VPP is set to the departure time of the airplane 15 of the outbound flight. However, the starting time of the participation period is not limited to the departure time of the airplane 15 of the outbound flight. The starting time of the participation period may be, for example, the time when charging/discharging preparation of the vehicle is completed.

The time when charging/discharging preparation is completed is, for example, the time when the connection between the connector of the contact charging/discharging equipment 20 and the connection port of the vehicle (vehicle 50, 60) is detected, or the time when it is detected that the non-contact charging/discharging equipment 30 and the vehicle (vehicle 50, 70) are aligned. A notification is sent from the contact charging/discharging equipment 20 or vehicle to the EMS server 100 when the connector and the connection port are connected. When the aligning between the non-contact charging/discharging equipment 30 and the vehicle is completed, a notification is sent from the non-contact charging/discharging equipment 30 or the vehicle to the EMS server 100. The EMS server 100 can recognize that preparation for charging/discharging is completed by receiving the notification. When the power system 1 is further provided with a charge/discharge server for managing charging/discharging of the vehicle, which will be described below in a third modification example, the contact charging/discharging equipment 20 and the non-contact charging/discharging equipment 30 may transmit the notification to the charge/discharge server.

### Third Modification Example

In the above-described embodiment and first and second modification examples, the communication devices 58, 68, 78 of the vehicles 50, 60, 70 communicate with the EMS server 100 and the smartphone 600. When a charge/discharge server (typically a server operated by a vehicle manufacturer) for managing charging/discharging of the vehicles 50, 60, 70 is provided, the communication device 58, 68, 78 may be configured to communicate with the charge/discharge server. That is, communication between the vehicles 50, 60, 70 and the outside (EMS server and smartphone) may be performed via the charge/discharge server.

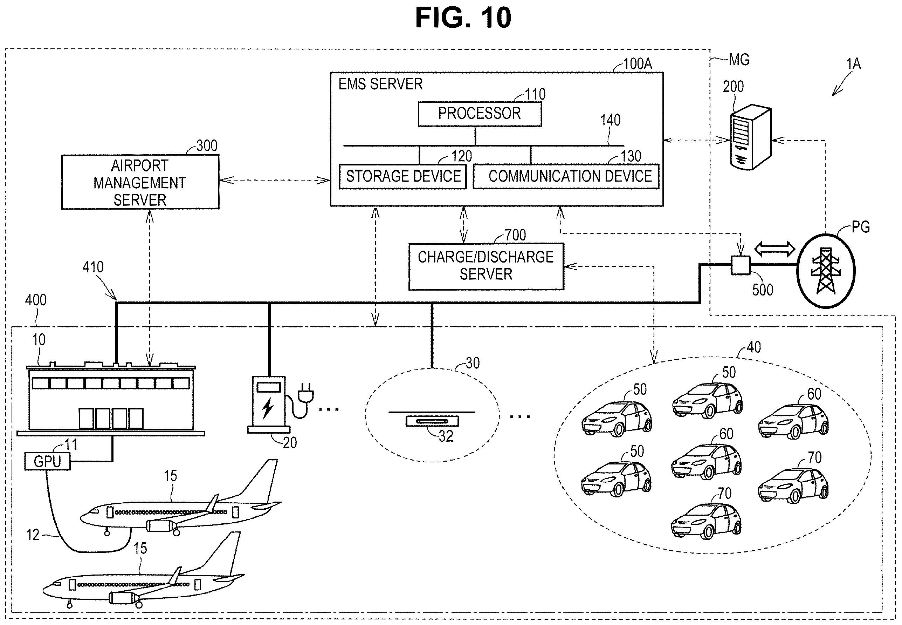

FIG. 10 is a diagram illustrating a schematic configuration of a power system 1A according to a third modification example. The power system 1A is obtained by changing the EMS server 100 to an EMS server 100A and adding a charge/discharge server 700 to the power system 1 according to the embodiment illustrated in FIG. 1. In FIG. 10, the charge/discharge server 700 is included in the microgrid MG, but the charge/discharge server 700 may be provided inside the microgrid MG or outside the microgrid MG.

The EMS server 100A and charge/discharge server 700 correspond to the EMS server 100 according to the embodiment. The charge/discharge server 700 is responsible for functions related to vehicle charging/discharging. The charge/discharge server 700 is configured to communicate with the contact charging/discharging equipment 20, the non-contact charging/discharging equipment 30, and the vehicles 50, 60, 70. The charge/discharge server 700 manages the contact charging/discharging equipment 20, the non-contact charging/discharging equipment 30, and the vehicles (vehicles 50, 60, 70). When a demand response (DR) is created, the EMS server 100A will transmit the DR with respect to a vehicle to the charge/discharge server 700. The charge/discharge server 700 transmits to the charge/discharge server 700 information (for example, corresponding information input to the VPP participation application form) indicating the charging/discharging equipment (contact charging/discharging equipment 20 connected with vehicle or non-contact charging/discharging equipment 30 aligned with vehicle) to which the vehicle corresponds together with the DR.

The charge/discharge server 700 transmits the DR to the corresponding charging/discharging equipment. The charging/discharging equipment and the vehicle charge/discharge the battery in response to the DR.

The power system 1A according to the third modification example can also achieve similar effects to the power system 1 according to the embodiment.

### Fourth Modification Example

In the above-described embodiment and first to third modification examples, an example in which the microgrid MG is built at an airport is described. However, a place where the construction of the microgrid MG is not limited to an airport, but may be a place or region where vehicles are expected to be parked for relatively long periods of time, for example. For example, the microgrid MG may be constructed at a station where Shinkansen arrives and departs, or a port where ships arrive and depart. In these cases, a Shinkansen or a ship corresponds to an example of the "moving body" according to the present disclosure.

When the moving body is a Shinkansen, the airport management server 300 can be read as a Shinkansen management server that manages the arrival and departure times of the Shinkansen. The Shinkansen management server stores at least operation schedules of all Shinkansen trains arriving at and departing from stations. In addition, when the moving body is a ship, the airport management server 300 can be read as a ship management server that manages the arrival and departure times of the ship. The ship management server stores at least operation schedules of all ships arriving at and departing from ports. An example in which the moving body is a Shinkansen will be described below.

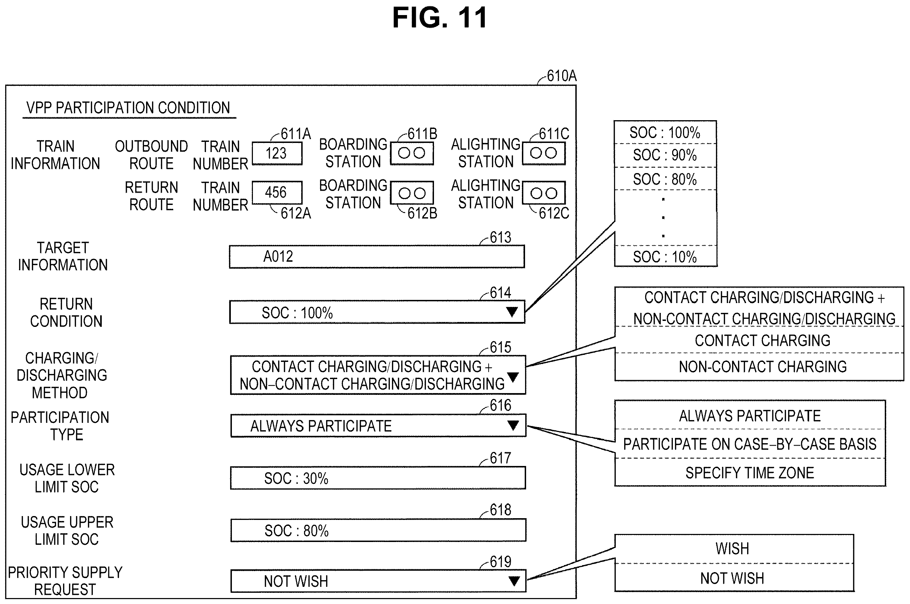

FIG. 11 is a diagram illustrating an example of a VPP participation application form displayed on a display screen of a smartphone 600 in a fourth modification example. This FIG. 11 corresponds to FIG. 3 describing the VPP participation application form 610 when the moving body is an airplane.

Referring to FIG. 11, this VPP participation application form 610A includes "train information" in place of the flight ticket number in contrast to the VPP participation application form 610 illustrated in FIG. 3. The train information includes input fields 611A, 611B, 611C for inputting the train number, boarding station, and alighting station for the Shinkansen on the outbound route, respectively, and input fields 612A, 612B, 612C for inputting the train number, boarding station, and alighting station for the Shinkansen on the return route, respectively. When the moving body is a Shinkansen train, the destination of the Shinkansen train and the user's destination (alighting station) do not necessarily match, and thus information (destination information) on the alighting station is required in addition to the train number.

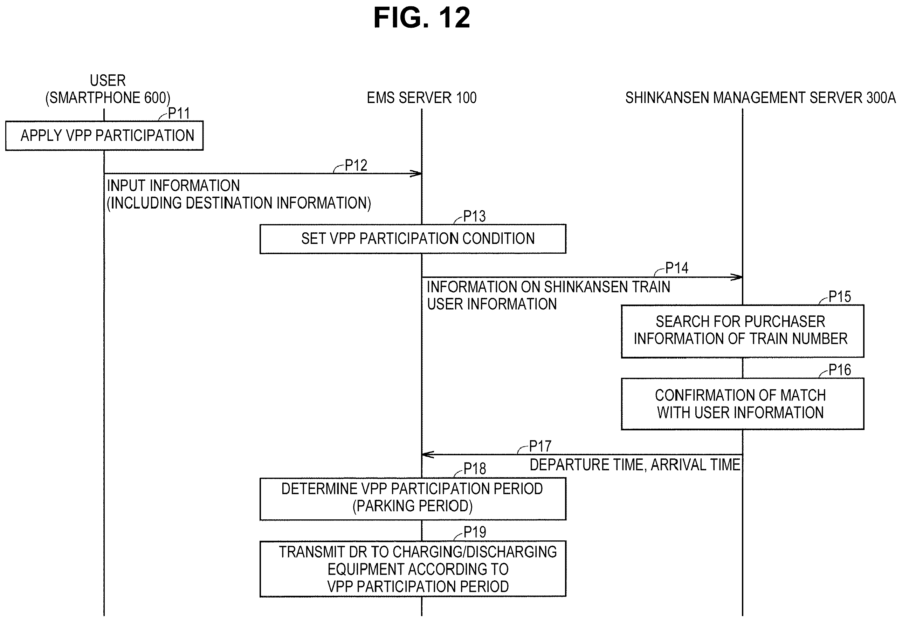

FIG. 12 is a sequence diagram outlining exchange of information between the smartphone 600, the EMS server 100, and a Shinkansen management server 300A in the fourth modification example. This FIG. 12 corresponds to FIG. 4 which describes the sequence when the moving body is an airplane.

Referring to FIG. 12, the user of the vehicle 50 applies for participation in the VPP by inputting various pieces of information from the VPP participation application form 610A (FIG. 11) of the smartphone 600 in P11. The smartphone 600 transmits the input information input from the VPP participation application form 610A to the EMS server 100 in process P12. This input information also includes destination information (information on alighting station).

The EMS server 100 sets the VPP participation condition for the user based on the input information acquired from the smartphone 600 in process P13. Then, in process P14, the EMS server 100 transmits information on the Shinkansen train that the user boards and inputs person information (user information) of the information indicating the VPP participation condition input to the VPP participation application form 610A to the Shinkansen management server 300A. The information on the Shinkansen train includes, for example, the outbound Shinkansen train number and destination information (alighting station information) and/or the return Shinkansen train number and destination information (alighting station information). The user information includes, for example, the user's name information, the vehicle information, and the like.

When the Shinkansen management server 300A receives the information on the outbound Shinkansen train and/or the information on the return Shinkansen train and the user information, in process P15, the Shinkansen management server 300A searches the database for purchaser information of the train number of the outbound and/or return Shinkansen train. Then, in process P16, the Shinkansen management server 300A checks whether the information on the Shinkansen train and the user information received from the EMS server 100 match the purchaser information searched in process P15, and when they match, in process P17, the Shinkansen departure time specified by the outbound train number and the Shinkansen arrival time specified by the return train number are transmitted to the EMS server 100.

When the user specified by the user information is not included in the purchaser information, the Shinkansen management server 300A transmits a message to that effect to the EMS server 100, and VPP participation according to the VPP participation application is postponed.

When the EMS server 100 acquires the information on the departure time and arrival time of the Shinkansen train boarded by the user from the Shinkansen management server 300A, the EMS server 100 executes the processes P18 and P19. The processes P18 and P19 are similar to the processes P8 and P9 illustrated in FIG. 4, respectively, and thus the description thereof will not be repeated.

According to this fourth modification example, even when the moving body is a Shinkansen train or a ship, the vehicle parked in the parking lot can be appropriately utilized as a distributed power source in the VPP, as in the case where the moving body is an airplane.

### Fifth Modification Example

In the above-described embodiment and first to fourth modification examples, it is assumed that the user parks the vehicle in a parking lot attached to the facility (airport facility, Shinkansen facility, ship facility) and makes a round trip between the facility and the destination. However, the present disclosure can also be applied to the case where the user travels one way.

For example, it is assumed that the user of the vehicle 50 (60, 70) boarded the airplane 15 for the outbound route and arrived at the destination from the airport facility 10 without applying for participation in the VPP. The vehicle 50 (60, 70) is parked in a parking lot attached to the airport facility 10.

In the fifth modification example, at the destination, the user launches the application on the smartphone 600 and enters information into the VPP participation application form 610. The flight ticket number of the return flight boarded by the user is input to an input field 612 for the return flight ticket number, while an input field 611 for the outbound flight ticket number is left blank. Alternatively, it is possible to prepare a VPP participation application form for one-way trip. In the VPP participation application form for one-way trip, for example, when one of the outbound flight ticket number or the return flight ticket number is input, the other may not be input.

When the EMS server 100 acquires the information input to the VPP participation application form 610, the EMS server 100 sets the VPP participation period of the vehicle 50 (60, 70) from the time of receiving the VPP participation application to the arrival time of the airplane 15 for the return trip to the airport facility 10. The EMS server 100 utilizes the vehicle 50 (60, 70) as a distributed power source in the VPP until the participation period elapses, using the same technique as described in the above-described embodiment. In the fifth modification example, the airport including the airport facility 10 corresponds to an example of the "destination" of the present disclosure.

As described above, by applying the present disclosure to the case where the user moves one way, it is possible to appropriately utilize the vehicle parked in the parking lot as a distributed power supply in the VPP.

### Sixth Modification Example

When the present disclosure is applied to the case where the user moves one way, as described in the fifth modification example, the case where the moving body is a local train can be included. In a VPP participation application form according to a sixth modification example, for example, the input fields for the flight ticket numbers of the outbound flight and the return flight may be deleted.

When boarding a local train, the user uses, for example, an electronic commuter pass. The EMS server 100 acquires entry information from a railway server that manages electronic commuter passes. Further, the EMS server 100 acquires timetable information from the railway server. The EMS server 100 predicts the local train that the user will board from the entry information and timetable information. For example, the EMS server 100 predicts the nearest local train that departs after the user's entry time as the train that the user will board from the timetable of the local train that travels from a station (one station at an end of a section of the commuter pass) where the user entered to a station (the other station at an end of the section of the commuter pass) where the user is expected to get off.

The EMS server 100 predicts the arrival time of the local train at the station (the station that is the destination and has a parking lot where the vehicle 50 (60, 70) is parked, or the nearest station to the parking lot where the vehicle 50 (60, 70) is parked) based on the timetable information. The EMS server 100 sets the VPP participation period from the time when the VPP participation application form is received until the expected arrival time of the local train. Then, the EMS server 100 allows the vehicle 50 (60, 70) to participate in the VPP until the participation period elapses using the same technique as described in the above-described embodiment.

### Seventh Modification Example

The fifth and sixth modification examples are based on the assumption that the one-way trip is the return trip. However, the present disclosure can be applied to the case where the one way is the outbound trip as well as the return trip. When one-way trip is an outbound trip, for example, it is assumed that the user has reserved a rental car or the like at a destination (an airport where the outbound airplane arrives). For example, the user reserves a rental car from the departure time of the airplane 15 for the outbound flight.

The user launches the application on the smartphone 600 and inputs information into the VPP participation application form 610 before boarding the airplane 15 for the outbound flight. In a seventh modified example, the flight ticket number of the outbound flight boarded by the user is input to an input field 611 for the outbound flight ticket number, while an input field 612 for the return flight ticket number is left blank. As described above, it is possible to prepare a VPP participation application form for one-way trip.

When the EMS server 100 acquires the information input to the VPP participation application form 610, the EMS server 100 sets the VPP participation period of the vehicle 50 (60, 70) from the time of receiving the VPP participation application to the arrival time of the airplane 15 of the outbound flight at the airport facility 10. The EMS server 100 allows the vehicle 50 to participate in the VPP until the participation period elapses using the same technique as described in the above-described embodiment.

As described above, even by applying the present disclosure to the case where the user moves one way, the vehicle parked in the parking lot can be appropriately utilized as a distributed power source in the VPP.

The embodiments disclosed this time should be considered as examples and not restrictive in all respects. The scope of the present disclosure is indicated by the scope of the claims rather than the description of the above-described embodiments, and is intended to include all modifications within the scope and meaning equivalent to the scope of the claims.

## Claims

1. A management server (100; 100A) comprising:
a communication device (130) configured to be communicable with charging/discharging equipment (20, 30) that transfers power to and from a vehicle (50, 60, 70) on which a battery (51, 61, 71) is mounted; and
a control device (110) configured to transmit a command regarding transfer of power to and from the vehicle (50, 60, 70) used by a user to the charging/discharging equipment (20, 30) via the communication device (130), wherein
the control device (110) is configured to,
acquire information on a moving body (15) that the user boards, and
acquire an arrival time at which the moving body (15) arrives at a destination based on the information on the moving body (15),
the destination is a place where the user alights from the moving body (15), and
the control device (110) is configured to transmit the command by the arrival time.

2. The management server (100; 100A) according to claim 1, wherein the control device (110) is configured to transmit the command by an updated arrival time when the arrival time is updated.

3. The management server (100; 100A) according to claim 2, wherein the control device (110) is configured to update the arrival time when the moving body (15) is delayed.

4. The management server (100; 100A) according to claim 1, wherein the information on the moving body (15) includes identification information for identifying the moving body (15).

5. The management server (100; 100A) according to claim 4, wherein the information on the moving body (15) further includes information on the place where the user alights from the moving body (15).

6. The management server (100; 100A) according to claim 1, wherein:
the information on the moving body (15) includes available section information of a boarding pass of the moving body (15) and information on a departure time of the moving body (15); and
the control device (110) is configured to,
acquire information on an entry time of the user to a departure/arrival point of the moving body (15), and
acquire the arrival time based on the available section information, the information on the departure time, and the information on the entry time.

7. The management server (100; 100A) according to claim 1, wherein
the control device (110) is configured to,
accept a condition set by the user regarding an amount of charge of the battery (51, 61, 71) at the arrival time, and
create the command such that the amount of charge of the battery (51, 61, 71) at the arrival time satisfies the condition.

8. The management server (100; 100A) according to claim 1, wherein
the control device (110) is configured to,
accept a condition set by the user regarding at least one of an upper limit amount of charge and a lower limit amount of charge of the battery (51, 61, 71) at a time of response to the command, and
create the command such that an amount of charge of the battery (51, 61, 71) satisfies the condition.

9. The management server (100; 100A) according to claim 1, wherein
the control device (110) is configured to,
accept a condition set by the user regarding a charging/discharging limit that is a limit of a charging/discharging amount of the battery (51, 61, 71) during a period for responding to the command, and
create the command such that the charging/discharging amount of the battery (51, 61, 71) satisfies the condition.

10. The management server (100; 100A) according to claim 1, wherein
the control device (110) is configured to,
accept setting of a response period for responding to the command set by the user, and
transmit the command to the vehicle (50, 60, 70) during the response period.

11. The management server (100; 100A) according to any one of claims 1 to 10, wherein
the communication device (130) is further configured to acquire a supply and demand request from an electrical grid, and
the control device (110) is configured to create the command based on the supply and demand request acquired via the communication device (130).

12. A management method, comprising steps of:
communicating with charging/discharging equipment (20, 30) that transfers power to and from a vehicle (50, 60, 70) on which a battery (51, 61, 71) is mounted and transmitting a command regarding transfer of power to and from the vehicle (50, 60, 70) used by a user to the charging/discharging equipment (20, 30);
acquiring information on a moving body (15) that the user boards; and
acquiring an arrival time at which the moving body (15) arrives at a destination that is a place where the user alights from the moving body (15) based on the information on the moving body (15), wherein
the step of communicating includes a step of transmitting the command by the arrival time.

13. The management method according to claim 12, further comprising a step of transmitting the command to the charging/discharging equipment by an updated arrival time when the arrival time is updated.

14. The management method according to claim 13, further comprising a step of updating the arrival time when the moving body (15) is delayed.

15. The management method according to claim 12, wherein the information on the moving body (15) includes identification information for identifying the moving body (15).
